# EUROPEAN PATENT APPLICATION

(11) **EP 1 936 369 A1**
(43) Date of publication of application: **25.06.2008**
(21) Application number: 06126567.4
(22) Date of filing: 20.12.2006
(51) Int. Cl.: G01N 30/30, B01J 19/12, B01J 37/34, G01N 30/72, G01N 30/84

(54) **Selective excitation of OH-containing solvents**

(71) Applicant: Agilent Technologies, Inc., Palo Alto, CA 95051 (US)
(72) Inventor: SCHRENK, Walter, 75334, Straubenhard (DE); REINHARDT, Thomas, 76227, Karlsruhe (DE)
(74) Representative: Barth, Daniel Mathias

(57) **Abstract**

A fluidic device (200) adapted for processing a fluidic sample (203), the fluidic device (200) comprising an electromagnetic radiation source (201) adapted for generating electromagnetic radiation (202) for selectively exciting hydroxyl-groups of the fluidic sample (203).

## Description

### BACKGROUND ART

The present invention relates to a fluidic device.

In liquid chromatography, a fluidic analyt may be pumped through a column comprising a material which is capable of separating different components of the fluidic analyt. Such a material, so-called beads which may comprise silica gel, may be filled into a column tube which may be connected to other elements (like a control unit, containers including sample and/or buffers) using fitting elements. In liquid chromatography, the mobile phase containing the dissolved analyte may be moved through a stationary phase which is capable of separating different components of the analyt. The movement of the liquid may be enforced by physical forces as gravitation or through pressure. The stationary phase may comprise separate particles e.g. silica gel or porous monolithic structures, it may be contained in a separate tube, capillary or microfluidic structure. The relation of the affinities of the analytes between the surface of the solid phase and the solved state in the mobile phase determines its retention in the solvent stream. A liquid chromatography setup may then be connected to other elements like sampling unit, detection unit, sample and solvent reservoirs and control unit.

More precisely, the fluidic (for instance dissolved) analyt may first be pumped through a first column (which may be denoted as an enrichment-column) and may then be pumped through a second column (which may be denoted as an analytical column). More precisely, the chromatographic setup may contain one or more functional sections as chemical reactor, mixer, extractor, enrichment column, online-SPE (solid phase extraction) and analytical separation column (which may be denoted as an analytical column).

US 5,908,552 discloses a column for capillary chromatographic separations, for example high performance liquid chromatography, including a column bed of packing material arranged in the inner bore of a column.

US 2004/0156753 A1 by the same applicant Agilent Technologies discloses a PAEK-based microfluidic device comprising two separate substrates which are bonded together to form channels where gases or liquids may move to accomplish applications of the microfluidic device. Thus, an internal cavity may be formed as a lumen or a channel of the microfluidic device.

WO 2005/094981 by the same applicant Agilent Technologies discloses a cyclic reactor system for amplifying nucleic acids using the polymerase chain reaction (PCR) process, wherein the reaction chamber is partitioned in reaction chamber portions. The entity of all reactor chamber portions is arranged in a cyclic manner thereby providing a circular fluid flow path, which permits a continuous and circulating processing of the amplification. This reactor system is operatively connected to an analysis device and allows nearly real-time analysis without interrupting the synthesis process. Furthermore, an embodiment of the cyclic reactor system is chip sized and therefore can be integrated with a plurality of cyclic reactor systems on a PCR reactor chip, which provides additionally an analysis device in an analysis level, and fluid support sources in a support level. A method for amplifying DNA using the polymerase chain reaction (PCR) is conducted by the use in this reactor system.

US 6,386,050 B1 by the same applicant Agilent Technologies discloses measuring a flow rate within a fluid-containing passageway including introducing heat fluctuations into the flow and then non-invasively monitoring the effects of the heat fluctuations propagating to or from one or more interrogation regions. The non-invasive monitoring may detect fluctuations in the refractive index of the flowing fluid as a result of variations in the temperature of the fluid. Electrical conductivity of the fluid may be monitored.

Microfluidic devices with heating elements external to the microfluidic devices are known e.g. from US 2005/0006372 A1 or US 7,015,030 B1. Microfluidic devices with internal electrical heating elements are described e.g. in US 6,572,830 B1, US 2005/0142036 A1, US 2002/0122747 A1, or US 2004/0164068 A1. DE 10321472 A1 describes a microfluidic module having a secondary fluid circuit for temperature control of the (main) fluid channel.

### DISCLOSURE

It is an object of the invention to provide an efficient fluidic device. The object is solved by the independent claims. Further embodiments are shown by the dependent claims.

According to an exemplary embodiment of the present invention, a fluidic device (for instance a liquid chromatography device) adapted for processing a fluidic sample is provided, the fluidic device comprising an electromagnetic radiation source (for instance an infrared laser) adapted for generating electromagnetic radiation for selectively exciting hydroxyl-groups (that is OH-groups) of the fluidic sample.

According to another exemplary embodiment, a method of processing a fluidic sample is provided, wherein the fluidic sample is to be conducted through a fluidic device, the method comprising generating electromagnetic radiation for selectively exciting hydroxyl-groups of the fluidic sample.

The term "fluidic device" may particularly denote a device for processing a fluid (including a gas, a liquid, and mixtures thereof). A fluidic chip device may at least partially be provided in and/or on a (plastic) chip as a substrate. Use of a quartz capillary is possible as well.

The term "electromagnetic radiation for selectively exciting hydroxyl-groups" may particularly denote photons having an appropriate wavelength to be capable to specifically excite OH-group containing substances by photon-matter interaction. Such specific photon-matter interactions may include resonance phenomena like resonance absorption of infrared light, particularly excitation of vibrational modes in the substance. For this purpose, infrared light in the wavelength range between essentially 2700 nm and essentially 3400 nm may be used.

The term "infrared radiation" may particularly denote light that has longer wavelengths than red light so that humans can not see it. The term may describe a band of the electromagnetic spectrum between the visible range and the microwave range. Photons of infrared light are less energetic than photons of visible light. Infrared radiation may particularly span three orders of magnitude and may include wavelengths between 700 nm and 1 mm. The term infrared radiation may denote light above the red perception limit of the human eye.

The term "substrate" may particularly denote any single layer or multiple layer arrangement serving as a carrier element of a fluidic (chip) device. In and/or on a substrate, one or more functional components of the fluidic device may be provided.

The term "processing element" may particularly denote any component which may influence a fluidic sample flowing through the device. It may particularly fulfill one of the functions of separating, purifying, mixing, heating, cooling, and chemically modifying the fluidic sample.

The term "beads" (or particles) may particularly denote a filling material of columns, for example balls with diameters in the range of micrometers, employed for chromatographically purposes.

According to an exemplary embodiment, fluidic devices may be provided, in which a mobile phase (and/or a stationary phase and/or parts of a device component) can be excited selectively by absorption of electromagnetic radiation of an adjusted frequency specifically by OH-groups of a fluidic sample. By using a relatively narrow wavelength band, it is possible to excite specific (particularly vibrational) modes of the hydroxyl-groups, so that (all) other components remain uninfluenced. Therefore, the heat transfer in the system may be kept as small as possible and a very specific and accurate heating and/or exciting scheme may be made possible.

An electromagnetic source adapted for this purpose, particularly a narrow-band infrared source, can be included in a fluidic chip device or externally thereof as a part of a larger apparatus in which the chip can be one component. In otherwords, one exemplary embodiment is directed to an infrared source integrated within a chip. Another embodiment is directed to an apparatus comprising an infrared source and a chip or another microfluidic device provided in the apparatus separately from the chip.

Therefore, selectively tempering a mobile phase in a fluidic device may be made possible. Exemplary embodiments are based on the recognition that in the infrared regime (for instance in the range of wave numbers between 3000 and 4000) absorption characteristics are found in which many common solvents (particularly water and alcohol) have strong electromagnetic wave absorption capabilities. Therefore, a selective excitation of a mobile phase is possible using specifically such radiation as an energy source. For this purpose, LEDs or lasers may be used which specifically emit electromagnetic radiation in this range. Such electromagnetic radiation sources are available, for instance, from the company "LASER 2000", see Bulletin number 1009 or www.laser2000.de.

Particularly in a temperature range between 20°C and 200°C, a temperature of a mobile phase may be accurately controlled (for instance for heating purposes) by a selective absorption of electromagnetic waves. According to another embodiment, PCR (polymerase chain reaction) processes may be excited or triggered.

Therefore, particularly the combination of small dimensioned fluidic devices (like microfluidic devices or microfluidic chips as disclosed as such, for instance, in US 2004/0156753 A1), the use of water or other OH-containing solvents, and the selective excitation with infrared radiation generated by very small dimensioned electromagnetic sources may allow for a selective excitation of vibrational modes (rotations and/or oscillations) of the OH-groups, thereby allowing to accurately and precisely control the temperature conditions within a sample of a very small volume (like milliliters, microliters, or nanoliters).

Exemplary fields of application of exemplary embodiments are sample heating, sample mixing, activating reactions (for instance hydrolysis of proteins) in a sample, sample detection, and/or flow measurement. Another exemplary field of application of exemplary embodiments is a pre-heating of an electrospray so as to generate a burst for further analysis in a mass spectroscopy device. An example for such an embodiment is the implementation of a selective OH-excitation system in an apparatus of the 1100 or 1200 Series LC/MSD of Agilent Technologies.

It may be particularly advantageous that appropriate materials for housings or substrates for a fluidic device, for example polyamide or glass, have excitation bands apart from the infrared range, so that a selective excitation of OH groups may be made possible only in the sample, essentially without influencing other components of a fluidic device.

According to an exemplary embodiment, it is also possible to alter the excitation characteristics in a fluidic path within a device in a spatially manner (for instance by performing a relative motion between the electromagnetic radiation source and a fluid channel through which the fluidic sample is conducted) and/or a time-dependent adjustment (for instance by generating a gradient) of the temperature characteristic.

According to an exemplary embodiment, a microfluidic device with a narrowband absorbing electromagnetic radiation source is provided for selectively exciting an OH band of a mobile phase using resonance phenomena. Such a microfluidic device may be integrated in the context of electrophoresis, gas chromatography, mass spectroscopy, liquid chromatography, etc.

Embodiments of the invention make use of the fact that many microchips use water as a solvent (most micro chip applications are of biological nature and therefore mainly use aqueous buffers). Water has an intense absorption band in the infrared range, so that water or other OH-containing solvents (like methanol or ethanol) can be selectively excited by the electromagnetic radiation generated in the fluidic device.

A device according to an exemplary embodiment may be adapted for a low volume processing, like 300 nl/min. A diameter of the capillary may be in the order of magnitude between 15 and 150 µm. For instance, in a multilayer chip arrangement of a fluidic device, a channel formed in an intermediate layer may have a height of 50 µm and a length of 75 µm. For instance, a power of the electromagnetic radiation source may be in the order of magnitude of microwatts. The excitation may be a narrowband excitation so that a specific chemical group may be excited. For instance, an appropriate narrow band may be 3 µm ± 0,5 µm.

Infrared radiation may be, for microfluidic applications, an ideal wavelength range, since less Rayleigh scattering occurs as compared to an optical excitation. Therefore, when small sample/solvent volumes including OH-groups like water shall be processed, a selective heating by an excitation via the absorption of infrared radiation may be made possible. Vibrations may be selectively excited.

The excitation may be used to move sample material, to trigger or catalyze chemical reactions (for instance the hydrolysis of proteins), to vary elusion properties of a chromatographic column or any other processing unit, for heating, for modifying viscosity, or for any other application particularly in the field of life sciences.

Next, further exemplary embodiments of the fluidic device will be explained. However, these embodiments also apply for the method of processing a fluidic sample.

The electromagnetic radiation source may be adapted for generating infrared radiation. Such an electromagnetic radiation source may be a light emitting diode (LED) or a laser. The electromagnetic radiation source may be adapted for generating electromagnetic radiation selectively in a range between essentially 2000 nm and essentially 4000 nm, particularly in a range between essentially 2700 nm and essentially 3400 nm, more particularly around essentially 3100 nm. Specifically the range between 2700 nm and 3400 nm fits properly to the absorption band of many OH-containing chemicals. Thus, these wavelength ranges allow to selectively excite the mobile phase, whereas other components remain essentially unexcited.

The electromagnetic radiation source may be adapted for generating electromagnetic radiation for selectively exciting hydroxyl-groups (that is to say OH-groups) of water, an alcohol (like methanol, ethanol), a carbonic acid, and a combination thereof. The exemplary list given clearly shows that the resonance excitation using infrared radiation fits particularly well with many conventional solvents, since all these examples include an OH-group.

The electromagnetic radiation source may be adapted for generating electromagnetic radiation for selectively exciting vibrational modes of hydroxyl-groups of the fluidic sample. Therefore, the excitation band may be adjusted so as to excite vibrational modes of the OH-groups.

The electromagnetic radiation source may further be adapted for generating electromagnetic radiation for selectively exciting resonance modes of hydroxyl-groups of the fluidic sample. By using resonance phenomena, an intense absorption in a specific wavelength band may be used for a very efficient heat transfer.

The electromagnetic radiation source may be adapted for generating a narrow-band electromagnetic radiation. The term narrow-band may denote that the bandwidth of the emitted electromagnetic radiation is much smaller than the wavelength itself. For instance, the bandwidth δλ may be less than 20% of a center wavelength λ, more particularly may be less than 10%. This allows a specific excitation, and the energetic losses and unspecific heat impact can be kept small.

The electromagnetic radiation source may be adapted for heating the fluidic sample. Therefore, the system may be used as an integrated heating system allowing to selectively introduce energy to heat the OH-containing substance.

The electromagnetic radiation source may further be adapted to provide energy for initiating a chemical reaction between different components of the fluidic sample. Therefore, when the fluidic device is used as a lab-on-chip, two or more components can be brought in interaction, and the reaction may be triggered catalytically by providing heat or light.

The electromagnetic radiation source may be adapted for initiating a polymerase chain reaction (PCR) in the fluidic sample. The term polymerase chain reaction may denote a technique for amplifying DNA, making it easier to isolate, clone and sequence samples. For a PCR, multiple copies of a DNA may be made, and this may require energy. The selective excitation according to an exemplary embodiment may help to initiate or trigger a polymerase chain reaction. Requirements for efficiently performing PCR are quickly alterable temperature phases, both in the time domain and spatially.

The device may comprise a first conduit (like a channel or a capillary) in which a first component of the fluidic sample is conducted, may comprise a second conduit (like a channel or a capillary) in which a second component of the fluidic sample is conducted and may comprise a mixing portion in which the first conduit intersects the second conduit for mixing the first component with the second component. When the electromagnetic radiation source is adapted for generating the electromagnetic radiation in the mixing portion, particularly exclusively in the mixing portion (for instance by focusing a spot there), then an interaction of the two components may be promoted with a high spatial resolution. Only this portion is heated, and remaining portions of the device may remain essentially uninfluenced.

The mixing portion may be positioned upstream of a chromatography column. Therefore, after having mixed the components, a chromatographic analysis of the reaction product can be carried out.

Alternatively (e.g. for post-column derivatisation), the mixing portion may be positioned downstream of a chromatography column. In such a scenario, a sample may first be separated, so that the components are known. Afterwards, a mixing of components may be carried out.

The fluidic device may comprise a moving mechanism adapted for selectively moving the electromagnetic radiation source relative to a conduit through which the fluidic sample is conducted. Therefore, a spatially dependent and varying heat introduction is made possible, so that the moving mechanism just moves the electromagnetic radiation source to a specific portion of the fluidic device in which a hydroxyl-group containing fluidic sample shall be heated. This may increase the flexibility and the user-friendliness of the device. According to one embodiment, the electromagnetic radiation source is moved and a substrate including a fluidic conduit may remain fixed (with regard to a lab system). According to another embodiment, the electromagnetic radiation source remains fixed and a substrate including a fluidic conduit may be moved (with regard to a lab system).

The fluidic device may comprise an electromagnetic radiation detector adapted for detecting electromagnetic radiation generated by the electromagnetic radiation source after interaction with the fluidic sample. Therefore, additionally or alternatively to the heating effect, the electromagnetic radiation altered by the fluidic sample may be used for detection purposes. The specific absorption in the infrared range may therefore be an indicator of the presence of OH-containing material.

The interaction may comprise a transmission of the generated electromagnetic radiation through the fluidic sample (that is to say a transmission measurement in which a damping can be indirectly measured), a reflection of the generated electromagnetic radiation at the fluidic sample, a scattering of the generated electromagnetic radiation in the fluidic sample (with constructive or destructive interference behind the device), and/or a fluorescence of the fluidic sample in response to the generated electromagnetic radiation (so that components of the fluidic sample first absorb electromagnetic radiation and then emit usually lower energies of electromagnetic radiation subsequently). It is also possible that an absorption of the generated electromagnetic radiation by the fluidic sample is measured. In such a scenario, the measurement detects how much energy or how many photons have been absorbed by the material.

The substrate may comprise a plurality of layers. For instance, three or five layers may form a laminated structure of the fluidic device which may allow for providing all the required components of the fluidic device within the layered structure.

Therefore, according to one embodiment, the substrate may comprise a top layer and a bottom layer. Furthermore, at least one intermediate layer may be provided which may be sandwiched between the top layer and the bottom layer. The at least one intermediate layer may comprise a conduit through which the fluidic sample is to be conducted, and at least one of the at least one intermediate layer(s) may comprise the electromagnetic radiation source. This may allow to provide a highly integrated system. The electromagnetic radiation source and the fluidic sample may be located in the same intermediate layer, or in different intermediate layers, or outside the substrate.

The fluidic device may comprise a processing element adapted for interacting with the fluidic sample for retaining the fluidic sample of a mobile phase and for allowing other components of the mobile phase to pass the processing element. The processing element may be adapted for retaining the fluidic sample (that is to say to trap selectively a fluidic sample of interest, for instance a special protein of a multi-component biological sample) and for allowing other components of the mobile phase to pass the processing element. This may be achieved due to different chemical properties of different components of the mobile phase, resulting in different ways of interacting between the components of the mobile phase and the stationary phase located fixed in enrichment-column. Therefore, a pre-separation may be performed in this processing element.

A further processing element may be located downstream the processing element and may be adapted for interacting with the fluidic sample and adapted to be supplied with the fluidic sample released from the processing element and to further separate the fluidic sample from other components of the mobile phase. This may be achieved due to different chemical properties of different components of the mobile phase, resulting in different ways of interacting between the components of the mobile phase and the stationary phase located fixed in the analytical column. Therefore, in combination with the processing element, a two-stage fluid separation system may be provided in which, after pre-separating the sample in the first processing element, a further processing in the second processing element may be performed to further increase the separation performance or degree of purity of the separated component.

The fluidic device may comprise a tip coupled to an outlet of the further processing element and adapted to be coupled to a mass spectroscopy unit. In other words, the fluidic device may comprise a tip emitting a spray (electro spray) of the separated fluidic sample and coupled to an outlet of the further processing element. The fluidic device may be implemented as a plastic microfluidic chip which has a tip at an outlet which tip may be coupled to a mass spectrometer unit for further processing. At such a tip, a microspray may be emitted which may be further analyzed by the mass spectroscopy unit.

The electromagnetic radiation source may be adapted for affecting the temperature of the fluidic sample at the tip. By influencing the temperature of the tip, also the temperature of the emitted spray may be set so as to prepare the sample for further processing in the mass spectroscopy unit.

The substrate of the fluidic device may comprise a plastic, a polymer, a glass, a metal, a semiconductor or a ceramic. Materials of the substrate may be selected in accordance with the required thermal properties, absorption properties, and fluid conducting properties.

The substrate may have an essentially rectangular (or another shape like a trapezoid) cross section. Furthermore, the substrate may have a plate-like shape. Typical dimensions of the substrate are a thickness of 0.3 mm, and a dimension of several cm in length and in width.

The fluidic device may comprise a conduit formed in the substrate, wherein the fluidic device may be conductible through the conduit. The fluidic sample may be brought in thermal contact with a gas or liquid flow which may be thermally coupled or physically coupled to the fluidic sample.

At least a part of the processing element and at least a part of the further processing element may be filled with a fluid separating material. Such a fluid separating material which may also be denoted as a stationary phase may be any material which allows an adjustable degree of interaction with a sample so as to be capable of separating different components of such a sample. The fluid separating material may be a liquid chromatography column filling material or packing material comprising at least one of the group consisting of polystyrene, cellulite, polyvinylalcohol, polytetrafluoroethylene, glass, polymeric powder, silicon dioxide and other suitable metal oxides. However, any packing material can be used which has material properties allowing an analyt passing through this material to be separated into different components, for instance due to different kinds of interactions or affinities between the packing material and fractions of the analyt.

At least a part of the processing element and at least a part of the further processing element may be filled with a fluid separating material, wherein the fluid separating material may comprise beads having a size in the range of essentially 1 µm to essentially 50 µm. Thus, these beads may be small particles which may be filled inside the separation columns. The beads may have pores having a size in the range of essentially 0.02 µm to essentially 0.03 µm. The fluidic sample may be passed through the pores, wherein an interaction may occur between the fluidic sample and the pores. By such effects, separation of the fluid may occur.

The processing element may have a size which differs from a size of the further processing element. Particularly, the processing element (enrichment-column) may be significantly smaller than the further processing element (main column). This different size may result in a different volume capability and in different fluid separation probabilities of the two processing elements, which may be adjusted or adapted to one another by the irradiation system according to an exemplary embodiment.

At least a part of components of the fluidic chip device may be integrated in a plastic chip. Therefore, exemplary embodiments may be implemented as well in a chip-like architecture in which an arrangement of multiple layers has integrated therein the components for the fluid processing.

The fluidic chip device may be adapted as a fluid separation system for separating components of the mobile phase. When a mobile phase including a fluidic sample is pumped through the fluidic chip device, for instance with a high pressure, the interaction between a filling of the column and the fluidic sample may allow for separating different components of the sample, as performed in a liquid chromatography device or in a gel electrophoresis device.

However, the fluidic device may also be adapted as a fluid purification system for purifying the fluidic sample. By spatially separating different fractions of the fluidic sample, a multi-component sample may be purified, for instance a protein solution. When a protein solution has been prepared in a biochemical lab, it may still comprise a plurality of components. If, for instance, only a single protein of this multi-component liquid is of interest, the sample may be forced to pass the columns. Due to the different interaction of the different protein fractions with the filling of the column (for instance using a gel electrophoresis device or a liquid chromatography device), the different samples may be distinguished, and one sample or a band of material may be selectively isolated as a purified sample.

The fluidic device may be adapted to analyze at least one physical, chemical and/or biological parameter of at least one component of the mobile phase. The term "physical parameter" may particularly denote a size or a temperature of the fluid. The term "chemical parameter" may particularly denote a concentration of a fraction of the analyt, an affinity parameter, or the like. The term "biological parameter" may particularly be a concentration of a protein, a gene or the like in a biochemical solution, a biological activity of a component, etc.

The fluidic device may be or may be implemented in different technical environments, like a sensor device, a test device for testing a device under test or a substance, a device for chemical, biological and/or pharmaceutical analysis, a capillary electrophoresis device, a liquid chromatography device, a gas chromatography device, an electronic measurement device, or a mass spectroscopy device. Particularly, the fluidic chip device may be a high performance liquid chromatography device (HPLC) by which different fractions of an analyt may be separated, examined and analyzed.

The processing element and the further processing element may be chromatographic columns for separating components of the fluidic sample. Therefore, exemplary embodiments may be particularly implemented in the context of a liquid chromatography apparatus.

The fluidic device may be adapted to conduct a liquid mobile phase through the first processing element and a second processing element. As an alternative to a liquid mobile phase, a gaseous mobile phase or a mobile phase including solid particles may be processed using the fluidic device. Also materials being mixtures of different phases (solid, liquid, gases) may be analyzed using exemplary embodiments.

The fluidic device may be adapted to conduct the mobile phase through the first processing element and the second processing element with a high pressure, particularly of at least 100 bar, more particularly of at least 500 bar. In the context of such a high pressure application, the temperature control of the mobile phase may be particularly of interest.

The fluidic chip device may be adapted as a microfluidic chip device. The term "microfluidic chip device" may particularly denote a fluidic chip device as described herein which allows to convey fluid through microconduits (like microchannels) having a dimension in the order of magnitude of µm or less.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1, Fig. 8, Fig. 9, Fig 12 and Fig 13 show diagrams illustrating a function of fluidic devices according to exemplary embodiments.

Fig. 2 to Fig. 7, Fig. 10, Fig. 11 illustrate fluidic devices according to exemplary embodiments.

The illustration in the drawing is schematically.

In the following, the selective infrared excitation of water and water containing solvents will be explained.

A selective excitation of fundamental vibrational modes of an OH-group in OH-containing solvents (for instance water, alcohols, carbonic acids and water containing liquids) may be possible in the "fingerprint band" of the mid infrared in the wavelength range of essentially 2700 nm to essentially 3400 nm with dedicated infrared sources, for example infrared LEDs or infrared laser diodes. Such a procedure may be used for applications like heating, mixing, reaction activation and/or liquid detection particularly in the field of life science.

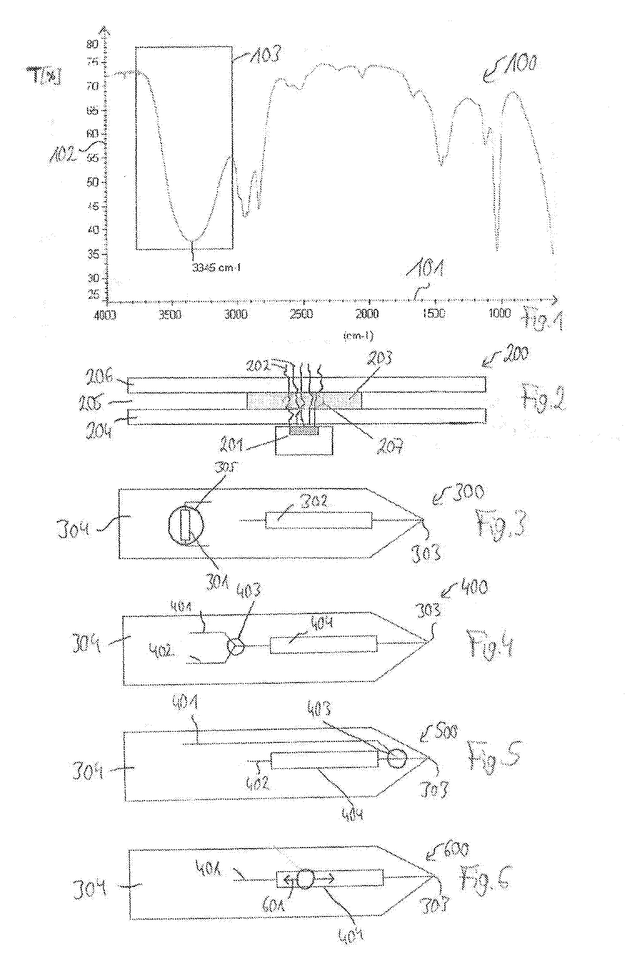

**Fig. 1** shows a diagram 100 illustrating an infrared spectrum of methanol with a wavelength range 103 indicative of an absorption of the OH-group.

Along an abscissa 101 of the diagram 100, wave numbers are plotted in cm⁻¹. Along an ordinate 102 of the diagram 100, a transmittance is plotted in percent. A selective excited wavelength range of OH-groups is indicated by reference numeral 103. Furthermore, a maximum absorption for methanol (CH₃OH) at 3345 cm⁻¹ is indicated as well in Fig. 1.

When using infrared excitation in the range 103 for exciting OH-containing solvents in a fluidic device, it is possible to efficiently prevent environment heating (for instance heating of glass, quartz, polyimide, polyethylene). Therefore, a low heat capacity may be obtained by only heating an OH-containing target substance which has to be excited. Furthermore, a precise positioning is possible, since only the targeted focus will be heated. A highly time-resolved performance may be made possible. Very fast rise and cooling times may be obtained, since the environment of OH-containing solvents has not to be heated. Pulse, sinus, temperature gradients or any other temperature patterns are possible.

Exemplary fields of applications are low liquid volume applications, for instance in capillaries, for microfluidic applications, in on-chip devices, etc. Exemplary measurement units including such systems are capillary liquid chromatography systems, or capillary EC devices.

In the following, referring to **Fig. 2**, a fluidic device 200 according to an exemplary embodiment of the invention will be explained.

The fluidic device 200 is adapted for processing a fluidic sample 203 flowing in a direction perpendicular to the paper plane of Fig. 2. The fluidic sample 203 may be an aqueous solution including biological components, like a mixture of proteins or DNA molecules.

An electromagnetic radiation source 201, namely an infrared LED (light emitting diode) or an infrared laser emitting around a wavelength of 3100 nm is provided which is adapted for generating infrared radiation 202 for selectively exciting OH-groups of the fluidic sample 203.

Fig. 2 shows a bottom layer 204, a top layer 206 which may be a glass or plastic carrier. Furthermore, a patterned intermediate layer 205 is shown which includes a channel or conduit through which the OH-group containing liquid 203 can flow. An activated zone 207 is shown in Fig. 2 as well.

The IR laser 201 selectively generates infrared radiation around a wavelength of 3100 nm. As can be seen in Fig. 1, in this wavelength regime 103, OH-groups may selectively absorb the energy to excite vibrational modes. The laser 201 is capable of producing a narrow-band electromagnetic radiation, since a laser almost generates monochromatic radiation. When the infrared photons 202 impinge on the fluidic sample 203, at least a part of them will be absorbed for heating the fluidic sample 203.

In the following, referring to the next figures, further microchip applications will be explained, that is to say fluidic chip devices.

A fluidic chip device 300 shown in **Fig. 3** comprises a substrate 304.

On the substrate 304, an enrichment-column 301 for a chromatographic analysis of the fluidic sample is provided. Fig. 3 shows a heated/activated spot 305 which corresponds to a portion of the chip 300 which can be selectively heated by irradiation with infrared radiation. Although not shown in the schematic drawing of Fig. 3, when the fluidic sample has retained from the enrichment-column 301, it may be transported (by a pump or the like) to an inlet of a main column 302 which is a further liquid chromatography column. After having passed the main column 302, separated sample portions can be transported to a tip 303 of the fluidic chip device 300. Although not shown in Fig. 3, when being emitted as a spray at the tip 303, the sample may be further analyzed in a mass spectrometer device (for instance in the context of an apparatus of the 1100 or 1200 Series LC/MSD of Agilent Technologies).

In the embodiment of Fig. 3, a selective desorption of an analyt from the trapping (i.e. enrichment) column 301 by a solvent radiation in the range of approximately 3000 nm may be made possible.

Referring to the fluidic chip device 400 shown in **Fig. 4****,** a first fluidic component may flow through a first conduit 401, and a second fluidic component may flow through a second conduit 402. In a mixing portion 403, both components can be brought in interaction with one another. For instance, a chemical reaction may be triggered to occur in the mixing portion 403. The mixing portion 403 may be a heated activated spot. In other words, when the two components are mixed, they are provided with thermal energy by the infrared laser 201 in the mixing portion 403.

After the mixing has occurred, and the chemical reaction has been carried out, the product substances may be conveyed to an analytical column 404 for a liquid chromatography analysis. Afterwards, the separated components are emitted as a spray via the tip 303 to a connected mass spectrometer. Thus, the embodiment of Fig. 4 relates to an enrichment-column reaction/derivatization system.

Next, referring to **Fig. 5****,** a post-column reaction/derivatization system in the form of a fluidic chip device 500 will be explained.

Along a first conduit 401, a reagent is supplied to the system. Along a second fluid conduit 402, an analyt is transported. The analyt may be analyzed in an analytical column 404 before being brought in interaction with the reagent in a heated/activated spot 403. The spot 403 equals to a mixing portion for mixing the reagent with the analyt and may be irradiated with a narrow band of infrared radiation.

A fluidic chip device 600 shown in **Fig. 6** relates to a controlled position resolved heating/activation system.

As can be taken from Fig. 6, a moving or movable heating/activating spot 601 is shown. As indicated by a double arrow in Fig. 6, the laser 201 may be moved with respect to the analytical column 404 so as to supply energy in a spatially dependent manner with a high spatial resolution.

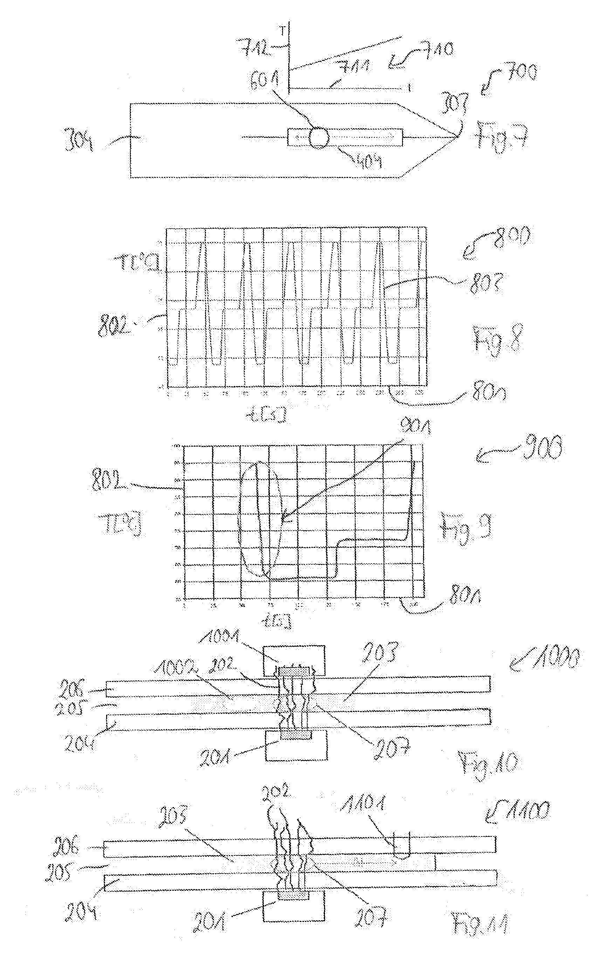

**Fig. 7** shows a fluidic chip device 700 according to another exemplary embodiment.

The fluidic chip device 700 allows for a controlled time heating/activation pattern/gradient system. Any desired time pattern may be used for the excitation, for instance a gradient scheme, a pulse scheme, a sine scheme, a triangle scheme, etc. This is indicated schematically in a diagram 710 in which a temperature is plotted along an ordinate 712 depending on a time plotted along an abscissa 711.

**Fig. 8** shows a diagram 800.

Along an abscissa 801 of the diagram 800, the time is plotted in seconds. Along an ordinate 802 of the diagram 800, the temperature is plotted in degrees Celsius.

The diagram 800 relates to an on-chip PCR (polymerase chain reaction) system. By applying different temperatures using spatial or timing patterns of infrared radiation, it is possible to perform repetitive PCR cycles, with fast heating and cooling portions, as indicated in a curve 803 of Fig. 8.

**Fig. 9** shows a diagram 900 which is similar to the diagram 800 of Fig. 8.

A fast cooling portion 901 is indicated in Fig. 9. Thus, also Fig. 9 shows a PCR cycle, whereas Fig. 8 shows a fast and accurate temperature control.

In the following, referring to **Fig. 10****,** a fluidic device 1000 will be explained which relates to a solvent and bubble detection (level sensing).

The system shown in Fig. 10 essentially differs from the system 200 shown in Fig. 2 in that, additionally, a photodiode 1001 is provided as a photosensor. The photodiode 1001 is arranged to oppose the infrared laser 201 with respect to the laminar structure 204 to 206. When infrared radiation 202 is emitted by the laser 201, it traverses the fluidic sample 203 (containing hydroxyl-groups) and impinges on the photodiode 1001. In case that an air bubble 1002 which is indicated schematically in Fig. 10 passes the activated zone 207, this can be detected by a change in the transmission properties detected by the photodiode 1001.

**Fig. 11** shows a fluidic device 1100 according to an exemplary embodiment which may be used for flow metering.

The device 1100 differs from the device 200 essentially in that a temperature measurement unit 1101 is provided. When a specific portion (located in the heated zone 207) of the fluidic sample 203 is selectively heated by the infrared radiation 202, and if the fluidic sample 203 flows along a direction is indicated with an arrow in Fig. 11, a time interval Δt can be detected and can be used to determine the flow speed of the fluidic sample 203, since the moved activated fluid drop can be measured at the temperature measurement unit 1101. Therefore, on the basis of a known distance between the heated zone 207 and the temperature measurement unit 1101 and on the basis of the measured time Δt, the flow speed can be calculated or evaluated.

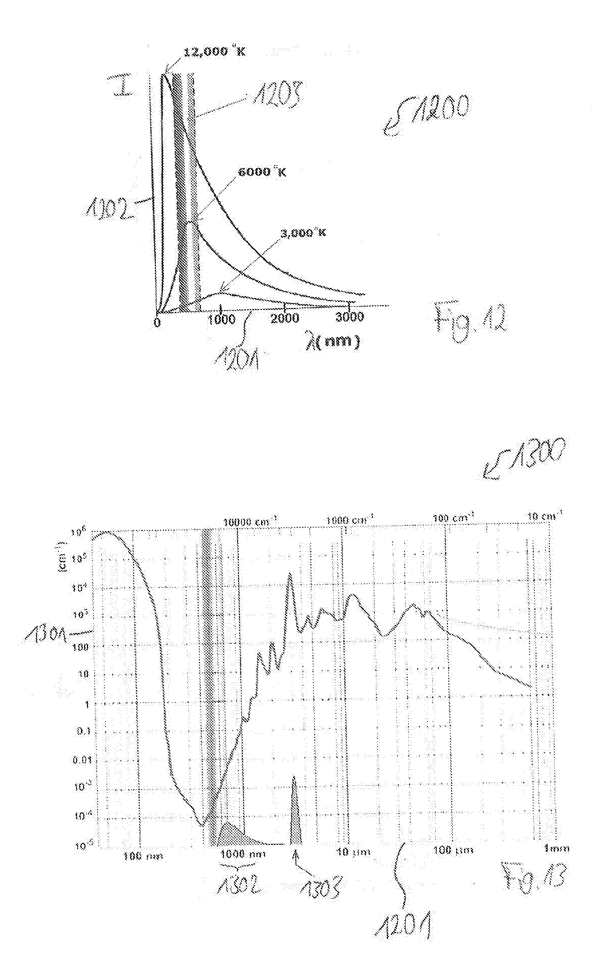

In the following, a diagram 1200 shown in **Fig. 12** will be used to explain some background topics.

Along an abscissa 1201 the wavelength is plotted in nm. Along an ordinate 1202 an intensity 1202 is plotted. Fig. 12 shows the thermal black body radiation, that is to say the radiation spectrum of a black body at a specific temperature of, for instance, 3000 K, 6000 K or 12.000 K. The visible spectrum is indicated by reference numeral 1203.

Conventionally, the term infrared in relation to thermal heating refers to the radiation of the so-called black body. This may be generated by glowing physical bodies, like the heating wire of a lamp. This means a broad wavelength distribution according to Planck's Law with mid wavelength usually between 700 nm and 1000 nm, causing a broad, relatively unspecific thermal excitation of the target molecules.

In the described applications of exemplary embodiments, a selective wavelength range is employed, taking advantage of the absorption coefficient of water (or other OH-containing solvents) around 3000 nm, which may be at least four magnitudes higher than ranges used with standard thermal infrared, and which are specifically exciting distinct molecular groups (OH).

**Fig. 13** shows a diagram 1300. An ordinate 1301 shows an absorption coefficient (in cm⁻¹). The thermal infrared between 600 nm and 1000 nm is indicated with reference numeral 1302. The selective excitation between 2700 nm and 3400 nm is indicated with reference numeral 1303.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A fluidic device (200) adapted for processing a fluidic sample (203), the fluidic device (200) comprising
an electromagnetic radiation source (201) adapted for generating electromagnetic radiation (202) for selectively exciting hydroxyl-groups of the fluidic sample (203).

2. The fluidic device (200) according to claim 1, wherein the electromagnetic radiation source (201) is adapted for at least one of:
heating the fluidic sample (203);
providing energy for initiating a chemical reaction between different components of the fluidic sample (203);
promoting a polymerase chain reaction in the fluidic sample (203).

3. The fluidic device (400) according to claim 1 or any one of the above claims,
comprising a first conduit (401) in which a first component of the fluidic sample (203) is conducted, comprising a second conduit (402) in which a second component of the fluidic sample (203) is conducted, and comprising a mixing and/or reaction portion (403) in which the first conduit (401) intersects the second conduit (402) for mixing the first component with the second component and/or for promoting a reaction between the first component with the second component.

4. The fluidic device (400) of the preceding claim, comprising at least one of the following features:
the electromagnetic radiation source (201) is adapted for generating the electromagnetic radiation (202) in the mixing and/or reaction portion (403), particularly exclusively in the mixing and/or reaction portion (403);
the mixing and/or reaction portion (403) is positioned upstream of a chromatography column (404);
the mixing and/or reaction portion (403) is positioned downstream of a chromatography column (404).

5. The fluidic device (600) according to claim 1 or any one of the above claims,
comprising a moving mechanism (601) adapted for selectively moving the electromagnetic radiation source (201) relative to a conduit (401) through which the fluidic sample (203) is conducted.

6. The fluidic device (200) according to claim 1 or any one of the above claims,
comprising an electromagnetic radiation detector adapted for detecting electromagnetic radiation (202) generated by the electromagnetic radiation source (201) after interaction with the fluidic sample (203).

7. The fluidic device (200) according to the preceding claim,
wherein the interaction comprises at least one of the group consisting of a transmission of the generated electromagnetic radiation (202) through the fluidic sample (203), a reflection of the generated electromagnetic radiation (202) at the fluidic sample (203), a scattering of the generated electromagnetic radiation (202) in the fluidic sample (203), a fluorescence of the fluidic sample (203) in response to the generated electromagnetic radiation (202), an absorption of the generated electromagnetic radiation (202) by the fluidic sample (203), and a combination thereof.

8. The fluidic device (300) according to claim 1 or any one of the above claims,
comprising a processing element (301) adapted for interacting with the fluidic sample (203) for retaining the fluidic sample (203) of a mobile phase and for allowing other components of the mobile phase to pass the processing element (301).

9. The fluidic device (300) according to the preceding claim,
comprising a further processing element (302) located downstream the processing element (301), adapted for interacting with the fluidic sample (203) and adapted to be supplied with the fluidic sample (203) released from the processing element (301) and to further separate the fluidic sample (203) from other components of the mobile phase.

10. The fluidic device (300) according to the preceding claim,
comprising a tip (303) coupled to an outlet of the further processing element (302) and adapted to be coupled to a mass spectroscopy unit.

11. The fluidic device (300) according to the preceding claim, comprising at least one of the following features:
the electromagnetic radiation source (201) is adapted for affecting the temperature of the fluidic sample (203) at the tip (303);
the fluidic device (300) comprises a mass spectroscopy unit coupled to the tip (303).

12. The fluidic device (300) according to claim 8 or any one of the above claims,
wherein at least one of the group consisting of the processing element (301) and the further processing element (302) comprises at least one of the group consisting of a separation column and a trap column.

13. The fluidic device (200) according to claim 1 or any one of the above claims, comprising at least one of the following features:
the electromagnetic radiation source (201) is adapted for generating infrared radiation (202);
the electromagnetic radiation source (201) comprises one of the group consisting of a light emitting diode and a laser;
the electromagnetic radiation source (201) is adapted for generating electromagnetic radiation (202) selectively in a range between essentially 2000 nm and essentially 4000 nm, particularly in a range between essentially 2700 nm and essentially 3400 nm, more particularly around essentially 3100 nm;
the electromagnetic radiation source (201) is adapted for generating electromagnetic radiation (202) for selectively exciting hydroxyl-groups of at least one of the group consisting of water, an alcohol, methanol, ethanol, a carbonic acid, and a combination thereof;
the electromagnetic radiation source (201) is adapted for generating electromagnetic radiation (202) for selectively exciting vibrational modes of hydroxyl-groups of the fluidic sample (203);
the electromagnetic radiation source (201) is adapted for generating electromagnetic radiation (202) for selectively exciting resonance modes of hydroxyl-groups of the fluidic sample (203);
the electromagnetic radiation source (201) is adapted for generating a narrow-band electromagnetic radiation (202);
the fluidic device (200) comprises a substrate comprising a plurality of layers (204 to 206);
the fluidic device (200) comprises a substrate comprising a plurality of layers (204 to 206), wherein the substrate comprises a top layer (204), a bottom layer (206), and at least one intermediate layer (205) sandwiched between the top layer (204) and the bottom layer (206);
the fluidic device (200) comprises a substrate comprising a plurality of layers (204 to 206), wherein the substrate comprises a top layer (204), a bottom layer (206), and at least one intermediate layer (205) sandwiched between the top layer (204) and the bottom layer (206), wherein at least one of the at least one intermediate layer (205) comprises a conduit through which the fluidic sample (203) is to be conducted, and wherein at least one of the at least one intermediate layer (205) comprises the electromagnetic radiation source (201);
the fluidic device (200) is a fluidic chip device (200), wherein the electromagnetic radiation source (201) is integrated within the fluidic chip device (200);
the fluidic device (200) comprises a chip, wherein the electromagnetic radiation source (201) is provided exterior with regard to the chip;
the substrate (204 to 206) comprises at least one material of the group consisting of a plastic, a polymer, glass, a metal, a semiconductor, and a ceramic;
the substrate (204 to 206) has one of the group consisting of an essentially rectangular cross section, and an essentially trapezoid cross section;
the substrate (204 to 206) has a plate shape;
the fluidic device (200) comprises a conduit, wherein the fluidic sample (203) is conductable through the conduit;
the fluidic device (200) comprises a capillary, wherein the fluidic sample (203) is conductable through the capillary;
at least one of the group consisting of at least a part of the processing element (301) and at least a part of the further processing element (302) is filled with a fluid separating material;
at least one of the group consisting of at least a part of the processing element (301) and at least a part of the further processing element (302) is filled with a fluid separating material, wherein the fluid separating material comprises beads having a size in the range of essentially 1 µm to essentially 50 µm;
at least one of the group consisting of at least a part of the processing element (301) and at least a part of the further processing element (302) is filled with a fluid separating material, wherein the fluid separating material comprises beads having pores having a size in the range of essentially 0.02 µm to essentially 0.03 µm;
at least a part of components of the fluidic device (200) is integrated in a plastic chip;
the fluidic device (200) is adapted as a fluid separation system for separating compounds of the fluidic sample (203);
the fluidic device (200) is adapted as a fluid purification system for purifying the fluidic sample (203);
the fluidic device (200) is adapted to analyze at least one physical, chemical and/or biological parameter of at least one compound of the fluidic sample (203);
the fluidic device (200) comprises at least one of the group consisting of a sensor device, a test device for testing a device under test or a substance, a device for chemical, biological and/or pharmaceutical analysis, an electrophoresis device, a capillary electrophoresis device, a liquid chromatography device, a gas chromatography device, a gel electrophoresis device, an electronic measurement device, and a mass spectroscopy device;
the processing element (301) and the further processing element (302) are chromatographic columns for separating components of the fluidic sample (203);
the fluidic device (200) is adapted to conduct a liquid fluidic sample (203) through the processing element (301) and the further processing element (302);
the fluidic device (200) is adapted to conduct the fluidic sample (203) through the processing element (301) and the further processing element (302) with a high pressure;
the fluidic device (200) is adapted to conduct the fluidic sample (203) through the processing element (301) and the further processing element (302) with a pressure of at least 100 bar, particularly of at least 500 bar;
the fluidic device (200) is adapted to convey the fluidic sample (203) through channels formed in a substrate (204 to 206);
the fluidic device (200) is adapted to convey the fluidic sample (203) through channels formed in a substrate (204 to 206), the channels having a dimension in the order of magnitude of micrometers;
the fluidic device (200) is adapted as a microfluidic device;
the fluidic device (200) is adapted as a nanofluidic device;
adapted to conduct the fluidic sample (203) through the fluidic device (200);
the fluidic device (200) is adapted as a fluidic chip device (200).

14. A method of processing a fluidic sample (203), wherein the fluidic sample (203) is to be conducted through a fluidic device (200), the method comprising
generating electromagnetic radiation (202) for selectively exciting hydroxyl-groups of the fluidic sample (203).
